# EUROPEAN PATENT SPECIFICATION

(11) **EP 4 326 828 B1**
(45) Date of publication and mention of the grant of the patent: **09.10.2024**
(21) Application number: 22720047.4
(22) Date of filing: 19.04.2022
(51) Int. Cl.: C09J 7/26, C08K 3/36, C09J 7/38, C09J 7/50, C08K 9/04, C09J 133/06, C09J 151/00, C09J 4/00, C08F 265/06

(54) **ADHESIVE LAYER FOR FLEXOGRAPHIC PLATE MOUNTING TAPE**
HAFTSCHICHT FÜR MONTAGEBAND FÜR FLEXODRUCKPLATTEN
COUCHE ADHÉSIVE POUR BANDE DE MONTAGE DE PLAQUE FLEXOGRAPHIQUE

(30) Priority: 19.04.2021 US 202163176822 P
(43) Date of publication of application: 28.02.2024
(73) Proprietor: 3M Innovative Properties Company, Saint Paul, Minnesota 55133-3427 (US)
(72) Inventor: VAN WERT, Scott A., Saint Paul, Minnesota 55133-3427 (US); LEBOW, Leslie M., Saint Paul, Minnesota 55133-3427 (US)
(74) Representative: Bergen, Katja
(86) International application number: PCT/IB2022/053648
(87) International publication number: WO 2022/224138

(56) References cited:
- US-A1- 2015 361 307
- US-A1- 2020 392 382

## Description

### CROSS-REFERENCE TO RELATED APPLICATION

This application claims priority to U.S. Provisional Application No. 63/176,822, filed April 19, 2021.

### FIELD OF THE DISCLOSURE

This disclosure relates to pressure sensitive adhesive compositions for use in foam cushion tapes for bonding articles such as printing plates used in a flexographic printing press and methods of making and using such tapes.

### BACKGROUND

Flexographic plate mounting tapes are used to mount flexographic printing plates to plate cylinders in a flexographic printing press. Novel, more advantageous mounting tapes for such uses are always in need. For example US2020392382A1 describes an assembly comprising a flexographic printing plate and a mounting tape comprising in order: a foam layer, a primer layer comprising thermoplastic polymeric binder and a pressure sensitive adhesive layer.

### SUMMARY OF THE DISCLOSURE

Disclosed herein are articles that comprise a foam layer having a first surface and a second opposing surface. The articles comprise a first pressure sensitive adhesive layer having a first surface and a second opposing surface, the first pressure sensitive adhesive layer comprising a poly(meth)acrylate polymer and an epoxy functional nanoparticle. The articles also comprise a first primer layer, the first primer layer comprising thermoplastic polymeric binder. The first primer layer is positioned between the first surface of the foam layer and the second surface of the first pressure sensitive adhesive layer.

Such articles can further comprise a second primer layer and a second pressure sensitive adhesive layer, wherein the second primer layer is positioned between the second surface of the foam layer and the second pressure sensitive pressure adhesive layer.

Such articles can further comprise a first release liner positioned on the first surface of the first pressure sensitive adhesive layer. Such articles or assemblies can further comprise a second release liner positioned on the second surface of the second pressure sensitive adhesive layer.

Such articles can further comprise a first skin layer positioned between the first surface of the foam layer and the first primer layer. Such articles or assemblies can further comprise a second skin layer positioned between the second surface of the foam layer and the second primer layer.

Disclosed herein are assemblies that comprise a flexographic printing plate and a mounting tape comprising a foam layer, having a first surface and a second opposing surface; a first primer layer comprising thermoplastic polymeric binder; a first pressure sensitive adhesive layer, having a first surface and a second opposing surface, the first pressure sensitive adhesive layer comprising a poly(meth)acrylate polymer and an epoxy functional nanoparticle. The first primer layer is positioned between the first surface of the foam layer and the second surface of the first pressure sensitive adhesive layer, wherein the first surface of the first pressure sensitive adhesive layer is attached to the flexographic printing plate.

Such assemblies can further comprise a second primer layer and a second pressure sensitive adhesive layer having a first surface and a second opposing surface, wherein the second primer layer is positioned between the second surface of the foam layer and the first surface of the second pressure sensitive pressure adhesive layer.

Such assemblies can further comprise a plate cylinder, wherein the plate cylinder is attached to the mounting tape via the second surface of the second pressure sensitive adhesive layer.

Such articles and assemblies can have the first primer layer, the second primer layer, or both independently with thicknesses of at least 5 micrometer (µm), 10 µm or 15 µm; of less than 200 µm, 100 µm, or 75 µm; or combinations thereof.

Such articles and assemblies can have the first primer layer, the second primer layer, or both independently with thicknesses of at least 1 micrometer (µm), 3µm or 5 µm; of less than 50 µm, 25 µm, or 8 µm; or combinations thereof.

Such articles and assemblies can have the foam layer exclusive of any skin layer having a thickness of at least 200 µm, 300 µm, or 400 µm; of less than 2500 µm, 2000 µm, or 1500 µm; or combinations thereof.

In such articles and assemblies, the nanoparticles in the first pressure sensitive adhesive layer can comprise silica and optionally other suitable inorganic particles. In such articles and assemblies, an organic surface coating can provide active binding sites comprising an epoxide group. In such articles and assemblies, the organic surface coating can provide active bonding sites derived from an epoxy silane selected from the group 2-(3,4-epoxycyclohexyl) ethyltrimethoxysilane, 2-(3,4-epoxycyclohexyl) ethyltriethoxysilane, (3-glycidoxypropyl) trimethoxysilane, (3-glycidoxypropyl) triethoxysilane, and any combinations or mixtures thereof.

In such articles and assemblies, the organic surface coating can provide active binding sites comprising epoxide groups present on the particle surface in an amount equivalent to at least 3 mole-%, at least 5 mole-%, at least 10 mole-%, or at least 25 mole-% of the total molar functional groups on said surface. In such articles and assemblies, the organic surface coating provides active binding sites comprising epoxide groups present on the particle surface in an amount of not more than 150 mole-% of the total molar functional groups on said surface.

In some such articles and assemblies, the proportion of silane to silica particles can be selected such that a 1 nm² surface area of silica particles is modified with 0.1 to 5 molecules of the organic silane compound.

In such articles and assemblies, the thermoplastic polymeric binder is a thermoplastic polymeric binder of an ethylenic polymer.

In such articles and assemblies, the first adhesive layer can have a solvent resistance that is higher than that of the second adhesive layer. In such articles and assemblies, the first adhesive layer can have a solvent resistance that is higher than that of the second adhesive layer as measured according to the Rub Resistance Test.

In such articles and assemblies, the first pressure sensitive adhesive layer, the second pressure sensitive adhesive layer, or both independently comprise an acrylate, acrylic acid, or combinations thereof.

In such articles and assemblies, the first primer layer can be laminated to the foam layer using heat and pressure.

The preceding summary of the present disclosure is not intended to describe each embodiment of the present invention. The details of one or more embodiments of the invention are also set forth in the description below. Other features, objects, and advantages of the invention will be apparent from the description and from the claims.

In this application:
Herein, the term "comprises" and variations thereof do not have a limiting meaning where these terms appear in the description and claims. Such terms will be understood to imply the inclusion of a stated step or element or group of steps or elements but not the exclusion of any other step or element or group of steps or elements. By "consisting of" is meant including, and limited to, whatever follows the phrase "consisting of." Thus, the phrase "consisting of" indicates that the listed elements are required or mandatory, and that no other elements may be present. By "consisting essentially of" is meant including any elements listed after the phrase and limited to other elements that do not interfere with or contribute to the activity or action specified in the disclosure for the listed elements. Thus, the phrase "consisting essentially of" indicates that the listed elements are required or mandatory, but that other elements are optional and may or may not be present depending upon whether or not they materially affect the activity or action of the listed elements. Any of the elements or combinations of elements that are recited in this specification in open-ended language (e.g., comprising and derivatives thereof), are considered to additionally be recited in closed-ended language (e.g., consisting of and derivatives thereof) and in partially closed-ended language (e.g., consisting essentially of, and derivatives thereof).

The words "preferred" and "preferably" refer to embodiments of the disclosure that may afford certain benefits, under certain circumstances. However, other embodiments may also be preferred, under the same or other circumstances. Furthermore, the recitation of one or more preferred embodiments does not imply that other claims are not useful and is not intended to exclude other embodiments from the scope of the disclosure.

In this application, terms such as "a," "an," and "the" are not intended to refer to only a singular entity but include the general class of which a specific example may be used for illustration. The terms "a," "an," and "the" are used interchangeably with the term "at least one." The phrases "at least one of" and "comprises at least one of" followed by a list refers to any one of the items in the list and any combination of two or more items in the list.

As used herein, the term "or" is generally employed in its usual sense including "and/or" unless the content clearly dictates otherwise.

The term "and/or" means one or all of the listed elements or a combination of any two or more of the listed elements.

Also, herein, all numbers are assumed to be modified by the term "about" and in certain embodiments, preferably, by the term "exactly." As used herein in connection with a measured quantity, the term "about" refers to that variation in the measured quantity as would be expected by the skilled artisan making the measurement and exercising a level of care commensurate with the objective of the measurement and the precision of the measuring equipment used. Herein, "up to" a number (e.g., up to 50) includes the number (e.g., 50).

Also, herein, the recitations of numerical ranges by endpoints include all numbers subsumed within that range as well as the endpoints (e.g., 1 to 5 includes 1, 1.5, 2, 2.75, 3, 3.80, 4, 5, etc.) and any sub-ranges (e.g., 1 to 5 includes 1 to 4, 1 to 3, 2 to 4, etc.).

As used in this specification and the appended claims, past tense verbs such as "coated" and "oriented" are intended to represent structure, and not to limit the process used to obtain the recited structure, unless otherwise specified.

Terms such as "first", "second", "third", etc. are used for the sake of convenience to distinguish similarly named components. Designation as "first" as opposed to "second" for example does not imply anything additional and is only used to distinguish one component from another similarly named component.

The term "adjacent" as used herein with regard to layers means that there may or may not be intervening layers between the two referred to layers.

The phrase "immediately adjacent" as used herein with regard to layers means the absence of any intervening layers.

As used herein, the term "room temperature" refers to a temperature of 20 °C to 25 °C.

As used herein, the phrase "directly bound" or "bound to" "coupled" refers to two materials that are in direct contact with each other and bound together.

As used herein, the phrase "(meth)acrylate" includes, separately and collectively, methacrylate and acrylate.

As used herein, the phrase "pressure sensitive adhesive (PSA)" means materials having the following properties: a) tacky surface, b) the ability to adhere with no more than finger pressure, c) the ability to adhere without activation by any energy source, d) sufficient ability to hold onto the intended adherend, and e) sufficient cohesive strength to be removed cleanly from the adherend; which materials typically meet the Dahlquist criterion of having a storage modulus at 1 Hz and room temperature of less than 0.3MPa.

The term "in the range" or "within a range" (and similar statements) includes the endpoints of the stated range.

Reference throughout this specification to "one embodiment," "an embodiment," "certain embodiments," or "some embodiments," etc., means that a particular feature, configuration, composition, or characteristic described in connection with the embodiment is included in at least one embodiment of the disclosure. Thus, the appearances of such phrases in various places throughout this specification are not necessarily referring to the same embodiment of the disclosure. Furthermore, the particular features, configurations, compositions, or characteristics may be combined in any suitable manner in one or more embodiments.

The above summary of the present disclosure is not intended to describe each disclosed embodiment or every implementation of the present disclosure. The description that follows more particularly exemplifies illustrative embodiments. In several places throughout the application, guidance is provided through lists of examples, which examples may be used in various combinations. In each instance, the recited list serves only as a representative group and should not be interpreted as an exclusive list. Thus, the scope of the present disclosure should not be limited to the specific illustrative structures described herein, but rather extends at least to the structures described by the language of the claims.

### BRIEF DESCRIPTION OF FIGURES

FIG. 1 shows a schematic depiction of a disclosed article according to illustrative embodiments.
FIG. 2 shows a schematic depiction of a disclosed article according to illustrative embodiments that includes, relative to the article depicted in FIG. 1, an additional primer layer and an additional pressure sensitive adhesive layer.
FIG. 3 shows a schematic depiction of a disclosed article according to illustrative embodiments that includes, relative to the article depicted in FIG. 2, two additional release liners.
FIG. 4 shows a schematic depiction of a disclosed article according to illustrative embodiments that includes, relative to the article depicted in FIG. 2, two additional skin layers.
FIG. 5 shows a schematic depiction of a disclosed assembly according to illustrative embodiments that includes, a mounting tape in accordance with the embodiment of FIG. 2 and a flexographic printing plate.
FIG. 6 shows a schematic depiction of a disclosed assembly according to illustrative embodiments that includes, a mounting tape in accordance with the embodiment of FIG. 2 and a plate cylinder.
FIG. 7 shows a schematic depiction of a disclosed assembly according to illustrative embodiments that includes, a mounting tape in accordance with the embodiment of FIG. 2, a flexographic printing plate, and a plate cylinder.

### DETAILED DESCRIPTION

The present disclosure provides articles that can also be referred to as tapes, or even more specifically mounting tapes. The present disclosure provides adhesive layers (referred to herein as a "first adhesive layer" for the sake of convenience) for affixing flexographic plates. The present disclosure additionally provides flexographic plate mounting tapes incorporating such adhesive layers, assemblies incorporating mounting tapes and flexographic printing plates, cylinders, or both.

Flexographic plate mounting tapes are used to mount flexographic printing plates to plate cylinders in a flexographic printing press. Mounted flexographic printing plates may require washing between printing runs. The washing process may cause free "nibs" of separated adhesive from the flexographic plate mounting tape to form. If free adhesive nibs produced during the plate washing process are deposited on the plate print surface, they can compromise print quality by creating spots or flaws in the printed articles. Use of first adhesive layers according to that disclosed herein provides reduced adhesive nib formation during such in-situ plate washing. Flexographic plate mounting tapes made with the subject adhesive layers provide improved solvent rub resistance as measured by a greater number of strokes before a solvent soaked adhesive layer of the subject invention begins to yield or fracture under rubbing force causing initial adhesive deformation. Further and more importantly this invention provides flexographic plate mounting tapes made with the subject primer that prevent the formation of freely detachable nibs after solvent soak and abrasion when tested as described herein. Such freely detached nibs result in a failing result in the solvent resistance test.

In some embodiments, solvent resistance can be described, shown, or both by some type of a solvent resistance test. For example, solvent resistance test can be shown at various levels by not showing any or a substantial amount of formed nibs, any or a substantial amount of freely detachable nibs, adhesive surface not being somewhat or at all disturbed once rolled, or any combination thereof.

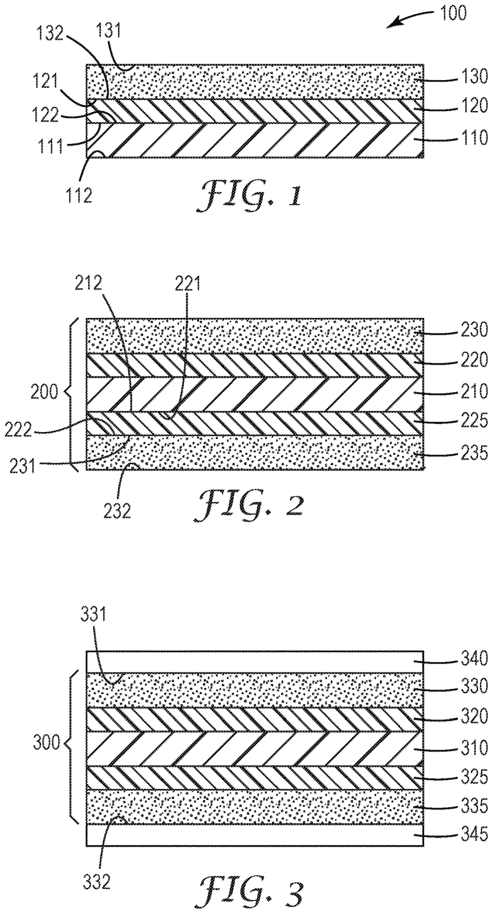

Disclosed articles include at least a foam layer, a first primer layer, and a first pressure sensitive layer. FIG. 1 shows an article 100 that includes a foam layer 110, a first primer layer 120 and a first pressure sensitive adhesive layer 130. As seen in FIG. 1, the first primer layer 120 is generally placed between the foam layer 110 and the first pressure sensitive adhesive layer 130. Each of the foam layer 110, the first primer layer 120 and the first pressure sensitive adhesive layer 130 also have two opposing surfaces. The foam layer 110 has a first surface 111 and an opposing second surface 112; the first primer layer 120 has a first surface 121 and an opposing second surface 122; and the first pressure sensitive adhesive layer 130 has a first surface 131 and a second opposing surface 132. The first primer layer 120 can therefore be more specifically described as being positioned between the first surface 111 of the foam layer 110 and the second surface 132 of the first pressure sensitive adhesive layer 130. The first primer layer 120 can also be described as immediately adjacent the first pressure sensitive adhesive layer 130. The first primer layer 120 can also be described as directly bound to the first pressure sensitive adhesive layer 130. The first primer layer 120 can also be described as immediately adjacent and directly bound to the first pressure sensitive adhesive layer 130. The first primer layer 120 can also be described as immediately adjacent the foam layer 110. The first primer layer 120 can also be described as directly bound to the foam layer 110. The first primer layer 120 can also be described as immediately adjacent and directly bound to the foam layer 110. Articles such as those depicted in FIG. 1 can be utilized as a single sided tape, part of a plate mounting system or can have additional layers added to them so that they could function as a doubled-sided tape or a double-sided mounting tape.

Disclosed articles can also include other optional components or layers. FIG. 2 shows such an illustrative article 200. The article 200 includes a foam layer 210, a first primer layer 220, a first pressure sensitive adhesive layer 230, where the first primer layer 220 is generally positioned between the foam layer 210 and the first pressure sensitive adhesive layer 230. The article 200 also includes a second primer layer 225 and a second pressure sensitive adhesive layer 235. The second primer layer 225 is generally positioned between the second surface 212 of the foam layer 210 and the second pressure sensitive adhesive layer 235. The second primer layer 225 has a first surface 221 and an opposing second surface 222; and the second pressure sensitive adhesive layer 235 has a first surface 231 and a second surface 232. The second primer layer 225 can also be described as immediately adjacent the second pressure sensitive adhesive layer 235. The second primer layer 225 can also be described as directly bound to the second pressure sensitive adhesive layer 235. The second primer layer 225 can also be described as immediately adjacent and directly bound to the second pressure sensitive adhesive layer 235. The second primer layer 225 can also be described as immediately adjacent the foam layer 210. The second primer layer 225 can also be described as directly bound foam layer 210. The second primer layer 225 can also be described as immediately adjacent and directly bound to the foam layer 210. Articles such as those depicted in FIG. 2 can be utilized as a double-sided tape or a double-sided mounting tape.

Other optional components or layers that can be included in disclosed articles include release liners. FIG. 3 shows such an illustrative article 300. The article 300 includes a foam layer 310, a first primer layer 320 and a first pressure sensitive adhesive layer 330, where the first primer layer 320 is generally positioned between the foam layer 310 and the first pressure sensitive adhesive layer 330; and a second primer layer 325 and a second pressure sensitive adhesive layer 335, where the second primer layer 325 is generally positioned between the foam layer 310 and the second pressure sensitive adhesive layer 335. This disclosed article also includes a first release liner 340 and a second release liner 345. The first release liner 340 is generally positioned adjacent the first surface 331 of the first pressure sensitive adhesive layer 330. The second release liner 345 is generally positioned adjacent the second surface 332 of the second pressure sensitive adhesive layer 335. The release liners are releasably bound to the pressure sensitive adhesive layer that they are adjacent to. Articles such as those depicted in FIG. 3 can be utilized as a double-sided tape or a double-sided mounting tape.

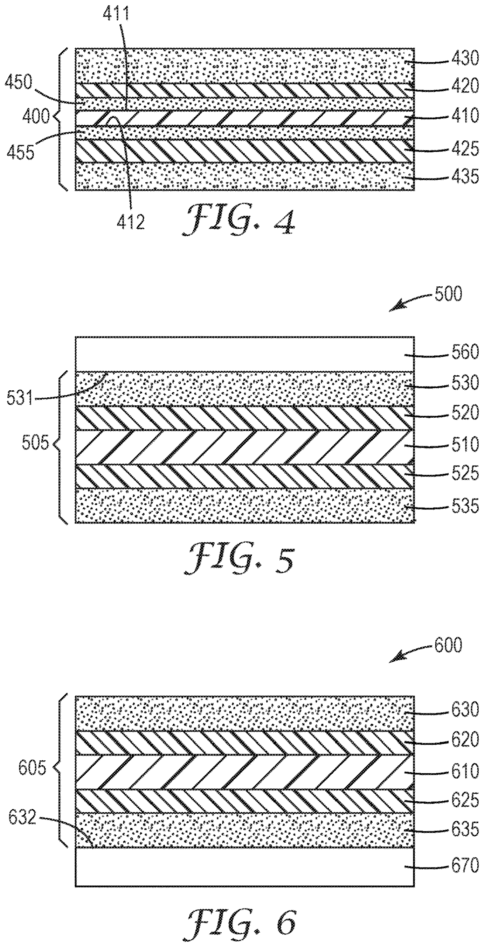

Other optional components or layers that can be included in disclosed articles include skin layers. FIG. 4 shows such an illustrative article 400. The article 400 includes a foam layer 410, a first primer layer 420 and a first pressure sensitive adhesive layer 430, where the first primer layer 420 is generally positioned between the foam layer 410 and the first pressure sensitive adhesive layer 430; and a second primer layer 425 and a second pressure sensitive adhesive layer 435, where the second primer layer 425 is generally positioned between the foam layer 410 and the second pressure sensitive adhesive layer 435. This disclosed article also includes a first skin layer 450 and a second skin layer 455. The first skin layer 450 is generally positioned between a first surface 411 of the foam layer 410 and first primer layer 420. The first skin layer 450 can also be described as immediately adjacent the foam layer 410. The first skin layer 450 can also be described as directly bound to foam layer 410. The first skin layer 450 can also be described as immediately adjacent and directly bound to the foam layer 410. The second skin layer 455 is generally positioned between the second surface 412 of the foam layer 410 and the second primer layer 425. The second skin layer 455 can also be described as immediately adjacent the foam layer 410. The second skin layer 455 can also be described as directly bound foam layer 410. The second skin layer 455 can also be described as immediately adjacent and directly bound to the foam layer 410. Articles such as those depicted in FIG. 4 can be utilized as a double-sided tape or a double-sided mounting tape.

The present disclosure provides assemblies that can also be referred to as flexographic printing setups.

Disclosed assemblies include a flexographic printing plate and a mounting tape such as those that are disclosed above. FIG. 5 shows such an illustrative assembly 500. The assembly 500 includes a flexographic printing plate 560 and mounting tape 505. The mounting tape 505 can include foam layer 510, a first primer layer 520, a first pressure sensitive adhesive layer 530, where the first primer layer 520 is generally positioned between the foam layer 510 and the first pressure sensitive adhesive layer 530. The mounting tape 500 can also include a second primer layer 525 and a second pressure sensitive adhesive layer 535, where the second primer layer 525 is generally positioned between the foam layer 510 and the second pressure sensitive adhesive layer 535. The first surface 531 of the first pressure sensitive adhesive layer 530 is adjacent (in some embodiments, immediately adjacent and/or directly bound) to the flexographic printing plate 560.

Disclosed assemblies can include a plate cylinder and a mounting tape such as those that are disclosed above. FIG. 6 shows such an illustrative assembly 600. The assembly 600 includes a plate cylinder 670 and mounting tape 605. The mounting tape 605 can include foam layer 610, a first primer layer 620, a first pressure sensitive adhesive layer 630, where the first primer layer 620 is generally positioned between the foam layer 610 and the first pressure sensitive adhesive layer 630. The mounting tape 605 can also include a second primer layer 625 and a second pressure sensitive adhesive layer 635, where the second primer layer 625 is generally positioned between the foam layer 610 and the second pressure sensitive adhesive layer 635. The second surface 632 of the second pressure sensitive adhesive layer 635 is adjacent (in some embodiments, immediately adjacent and/or directly bound) to the plate cylinder 670.

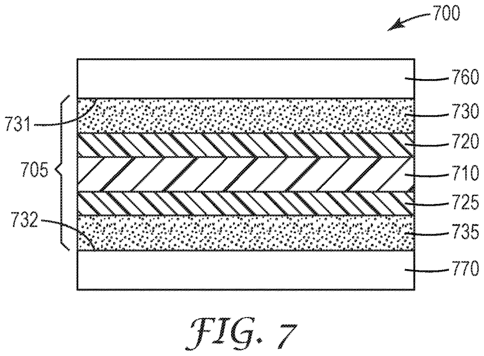

Disclosed assemblies can also include both a flexographic printing plate and a plate cylinder. FIG. 7 shows such an illustrative assembly 700. The assembly 700 includes a flexographic printing plate 760 a plate cylinder 770 and mounting tape 705. The mounting tape 705 can include foam layer 710, a first primer layer 720, a first pressure sensitive adhesive layer 730, where the first primer layer 720 is generally positioned between the foam layer 710 and the first pressure sensitive adhesive layer 730. The mounting tape 705 can also include a second primer layer 725 and a second pressure sensitive adhesive layer 735, where the second primer layer 725 is generally positioned between the foam layer 710 and the second pressure sensitive adhesive layer 735. The first surface 731 of the first pressure sensitive adhesive layer 730 is adjacent to the flexographic printing plate 760, and the second surface 732 of the second pressure sensitive adhesive layer 735 is adjacent (in some embodiments, immediately adjacent and/or directly bound)to the plate cylinder 770.

In some applications of disclosed flexographic plate mounting tape, a flexographic printing plate is adhesively coupled to a plate cylinder of a flexographic printing press (not shown) by use of disclosed flexographic plate mounting tapes. Typically, a flexographic plate mounting tape is coupled to flexographic printing plate through the first pressure sensitive adhesive layer and coupled to the plate cylinder through second pressure sensitive adhesive layer.

In some embodiments, the second surface of a foam layer is further bound to an optional internal adhesion layer, which is further coupled to an optional carrier layer, which is further coupled to the second pressure sensitive adhesive layer. In some embodiments, first primer layer is provided between an optional carrier layer and an optional internal adhesion layer. In some embodiments, a second optional primer layer is provided between carrier layer and the second pressure sensitive adhesive layer.

Disclosed articles and assemblies include a foam layer. The material of the foam layer is typically resilient and may possess rapid rebound and low compression set characteristics and may be crosslinked. In some embodiments, the foam layer may comprise any suitable polymeric material. In some embodiments, the foam layer comprises an olefinic polymer. In some embodiments, the foam layer comprises ethylenic polymer, wherein the ethylenic polymer may include polyethylene, ethylene/vinyl acetate (EVA) copolymer, ethylene acrylic acid copolymer, ethylene methyl acrylate copolymer, and ethylene propylene copolymer and combinations thereof. In some embodiments, the foam layer comprises ethylene/vinyl acetate (EVA) copolymer. In some embodiments, the foam layer comprises crosslinked ethylene/vinyl acetate (EVA) copolymer. In some embodiments, the foam layer comprises one or more polymers comprising a thermoplastic elastomer, block isoprene copolymer, a thermoplastic elastomer block butadiene copolymer, a poly(meth)acrylate polymer, a polyurethane polymer, an olefin polymer, an ethylenic polymer, a polypropylene polymer; a polyester polymer, or a polycarbonate polymer. Foam layers may be foamed by use of chemical blowing agents, such as inert gasses, air, or chemical species that break down to release gasses upon heating; or physical blowing agents, such as expandable microspheres.

Useful foam layers may have a thickness of at least 200 micrometers (µm), in some embodiments at least 300 micrometers, and in some embodiments at least 400 micrometers. In some embodiments foam layers may have a thickness of less than 2500 micrometers, in some less than 2000 micrometers, and in some less than 1500 micrometers.

Disclosed articles and assemblies include a first pressure sensitive adhesive (PSA) layer and, in some embodiments, include a first PSA layer and a second PSA layer.

The first PSA comprises a polyacrylate polymer. In some embodiments, the first PSA may comprise a poly(meth)acrylate polymer. In some embodiments, the first PSA may comprise a tackified poly(meth)acrylate. In some embodiments, the first PSA comprises a poly(meth)acrylate polymer comprising units derived from polar monomer in an amount of 0.1-15 wt% of the total weight of the polyacrylate polymer, in some embodiments 0.5-15 wt%, and in some embodiments 3-12 wt% wherein the polar monomer is selected from the group consisting of acrylic acid, itaconic acid, N,N dimethylacrylamide, N-vinyl-2-pyrrolidone, N-vinyl caprolactam, acrylonitrile, tetra-hydrofurfuryl acrylate, glycidyl acrylate, 2-phenoxyethylacrylate, benzylacrylate, and combinations thereof. In some embodiments, the first PSA comprises a poly(meth)acrylate polymer comprising units derived from carboxylic acid functional monomer in an amount of 0.1-15 wt% of the total weight of the poly(meth)acrylate polymer, in some embodiments 0.5-15.0 wt%, and in some embodiments 3-12 wt%. In some embodiments, the first PSA may comprise a poly(meth)acrylate polymer comprising units derived from acrylic acid monomer in an amount of 0.1-15 wt% of the total weight of the poly(meth)acrylate polymer, in some embodiments 0.5-15 wt%, and in some embodiments 3-12 wt%.

The first PSA comprises epoxy functional nanoparticles. The nanoparticles may be any of the inorganic nanoparticles described herein below. In some embodiments, the epoxy functional nanoparticles comprise silica. The silica may comprise fumed silica. The silica may comprise particles with a mean primary particle size of at least 5 nanometers (nm), or 10 nm, for example; of less than 50 nm, 100 nm or 200 nm, for example; or any combinations thereof.

The relative amount of silica as a % ratio of the total (meth)acrylate PSA polymer content may vary from at least 0.01 wt%, 0.05 wt%, or 0.08 wt%, or 0.1 wt%; to less than 2.0 wt%, 6.0 wt% or 10.0 wt%; or combinations thereof.

Without wishing to be bound to a theory, it is believed that the functional nanoparticles of the subject invention, provide covalent linkages between the well anchored nanoparticles residing in the PSA layer and the thermoplastic primer layer. More specifically the epoxide ring opening reaction is believed to form covalent bonds with moieties in the thermoplastic bonding layer form substantiative covalent linkage firmly bonding the interface. It is a further advantage of the invention that the functionalized nanoparticles do not separately contribute to the apparent crosslink density of the PSA. In other words, while the functional nanoparticles reinforce the PSA, a wide range of concentrations of the epoxide moiety can be used on the nanoparticle surface while not appreciably affecting the adhesive stiffness or crosslink density of the PSA layer itself. Such crosslinking density can, for example, be measured through solvent gel swell or alternatively mechanical testing such as stress relaxation of the PSA layer. A wide concentration range of epoxy functional units may be employed on the silica nanoparticles to provide the benefit of improved solvent resistance while not adversely affecting other properties such as easy and predictable removability and holding resistance for instance in order to maintain plate lifting resistance in the plate mounting application. Further surprisingly the adhesive tape of the invention provides stable adhesion and performance over weeks and months (projected to years) even when the tape is stored at humid conditions and elevated temperatures. Moreover, the adhesive tape of the invention provides stable adhesion and both ease of removability and holding performance over weeks and months (projected to years) even when the tape is used at humid conditions and elevated temperatures to bond and hold polyester film backed photopolymer plates to print cylinders. In some cases, it is believed that the in-situ formation of epoxy surface modified nanoparticles within the first PSA layer is aided by moisture supplied to the PSA layer through use and coating of a water borne first primer layer. Epoxy surface modified nanoparticles may be prepared according to the teachings of US6899948 B2.

In some embodiments, the first PSA further comprises a silane, for example an organic silane compound. In some embodiments, the silane can be utilized to surface modify the silica in the PSA. In some embodiments, the silane can preferably include an epoxy group. Examples of the epoxy group-containing organic silane compounds can include β-(3,4-epoxycyclohexyl)ethyltrimethoxysilane, γ-glycidoxypropyltrimethoxysilane, γ-glycidoxypropylmethyldiethoxysilane, and γ-glycidoxypropyltriethoxy silane.

In some embodiments, the proportion of silane to silica particles is preferably selected such that a 1 nm² surface area of silica particles is modified with 0.1 to 5 molecules of the organic silane compound.

In some embodiments, the first PSA further comprises in-situ formed silane surface functionalized silica nanoparticles. In some embodiments, the functionalized silica nanoparticles present in the first PSA layer comprises a surface modified with epoxy group- functional organic silane. In some embodiments, the in-situ formation of silane surface functionalized silica nanoparticles comprises the step of coating a water borne thermoplastic first primer layer on the first PSA layer after the first PSA layer has been formed.

In some embodiments, a first PSA layer may include a PSA that are a product of an anionic polymerization. For anionic polymerization, it is preferred to use inert solvents as the reaction medium, such as aliphatic and cycloaliphatic hydrocarbons, for example, or else aromatic hydrocarbons.

In some embodiments, a first PSA layer may include a crosslinker. For UV crosslinking it may be useful to add UV photoinitiators. The photoinitiators may be of the Norrish I or Norrish II type. A number of groups of photoinitiators may optionally be included, as follows: benzophenone, acetophenone, benzil, benzoin, hydroxyalkylphenone, phenyl cyclohexyl ketone, anthraquinone, trimethylbenzoylphosphine oxide, methylthiophenyl morpholinyl ketone, aminoketones, azobenzoins, thioxanthone, hexarylbisimidazole, triazine, or fluorenone, it being possible for each of these radicals to be further substituted by one or more halogen atoms and/or one or more alkoxy groups and/or one or more amino groups or hydroxyl groups. A representative overview is given in "Photoinitiation, Photopolymerization and Photocuring, Fundamentals and Applications", by J.-P. Fouassier, Hanser Publishers, Munich, Vienna, New York 1995. For further details, consult "Chemistry & Technology of UV & EB Formulation for Coatings, Inks & Paints", Volume 5, A. Carroy, C. Decker, J. P. Dowling, P. Pappas, B. Monroe, ed. by P. K. T. Oldring, publ. by SITA Technology, London, England 1994.

Where the first PSA layer may be applied from solution, it may be useful to add from 0.05 to 3% by weight, or more preferably from 0.1 to 2% by weight, of crosslinkers, based on the weight fraction of the monomers in the adhesive.

The crosslinker is typically a metal chelate or an organic compound which reacts with a functional group of a comonomer and hence reacts directly with the polymer. For thermal crosslinking, peroxides as well are also suitable. For polymers containing acid groups it is also possible to use difunctional or polyfunctional isocyanates and difunctional or polyfunctional epoxides.

Examples of suitable thermal crosslinkers include aluminum(III) acetylacetonate, titanium(IV) acetylacetonate and iron(III) acetylacetonate. The corresponding zirconium compounds, for example, may also be used for crosslinking, however. Beside the acetylacetonates, the corresponding metal alkoxides, such as titanium(IV) n-butoxide or titanium(IV) isopropoxide, for example, are likewise suitable.

Moreover, for thermal cross linking, it is possible to use polyfunctional isocyanates sold under the trade designation "DESMODUR" from Bayer. Further crosslinkers may be difunctional or polyfunctional aziridines, oxazolidines or carbodiimides.

When crosslinking with actinic radiation, the adhesive material may be optionally blended with a crosslinker. Preferred substances that crosslink under radiation, include for example, difunctional or polyfunctional acrylates, including difunctional or polyfunctional urethane acrylates, or difunctional or polyfunctional methacrylates. Simple examples thereof include 1,6-hexanediol diacrylate, pentaerythritol tetraacrylate, trimethylolpropane triacrylate, or 1,2-ethylene glycol diacrylate. However, it is also possible to use any known difunctional or polyfunctional compounds that are capable of crosslinking polyacrylates under radiation.

In some embodiments, the second PSA layer may comprise a composition the same as or similar to that of the first PSA layer. In other embodiments, the second PSA layer may additionally or alternatively comprise a tackified rubber. In some embodiments, the second PSA may comprise a tackified natural rubber. In some embodiments, the second PSA may comprise a tackified synthetic rubber. In some embodiments comprising multiple PSA layers, all PSA layers are of the same composition. In some embodiments comprising multiple PSA layers, PSA layers differ in composition. In various embodiments, PSA layers, comprise cross-linked polymers.

Useful PSA layers, independently including both first and second pressure sensitive adhesive layers as disclosed herein may have a thickness of at least 15 micrometers, in some embodiments at least 20 micrometers, and in some embodiments at least 30 micrometers. In some embodiments PSA layers may have a thickness of less than 200 micrometers, in some less than 100 micrometers, and in some less than 70 micrometers. In some embodiments, other adhesive layers, if included in disclosed articles and assemblies may be subject to the same constraints on thickness.

Adhesive layers (such as first and second pressure sensitive adhesive layers, for example) may comprise relief features in their outer surface (not shown). In some such embodiments that also include one or more release liners the release liner may have an embossed surface facing the adhesive layer which imparts and/or matches relief features in the outer surface of the PSA layer.

Disclosed articles and assemblies include a first primer layer. The first primer layer, as designated herein is the primer layer, if more than one primer layer is included, that is closest to a flexographic printing plate when the article is utilized with a flexographic printing plate. In some embodiments the first primer layer includes a thermoplastic polymeric binder. In some embodiments the first primer layer includes a thermoplastic polymeric binder and inorganic nanoparticles.

The first primer layer comprises thermoplastic polymeric binders of ethylenic polymers. In some embodiments, the first primer layer comprises a thermoplastic polymeric binder of ethylene vinyl acetate copolymers. In some embodiments, the thermoplastic polymeric binders additionally comprise one or both of wax and resin. In some embodiments, the thermoplastic polymeric binders additionally comprise one or both of wax and resin comprising softening points below 150°C. In some embodiments, the thermoplastic polymeric binder components along with any additives such as waxes and resins are selected to provide hot adhesive tack of the first primer layer within the range 80°C to 150°C. In some embodiments, the thermoplastic polymeric binders comprise at least 30 wt%, in some at least 40 wt%, in some at least 50 wt%, in some at least 70 wt%, and in some at least 90 wt% of the total weight of the first primer layer.

The first primer layer may optionally comprise inorganic nanoparticles. In some embodiments the inorganic nanoparticles comprise nanometer-sized particles. The term "nanometer-sized" refers to particles that are characterized by an average particle size (e.g., the average of the largest dimension of the particles, or the average particle diameter for spherical particles) in the nanometer range, often no greater than 200 nanometers (nm), and preferably no greater than 100 nm (prior to surface modification, i.e., functionalization).

Average particle size of the nanoparticles can be measured using any suitable technique, including for example transmission electron microscopy. Preferably, particle size refers to the number average particle size and is measured using an instrument that uses transmission electron microscopy or scanning electron microscopy. Another method to measure particle size is dynamic light scattering that measures weight average particle size. One example of such an instrument found to be suitable is the N4 PLUS SUB-MICRON PARTICLE ANALYZER available from Beckman Coulter Inc. of Fullerton, CA.

In some embodiments the inorganic nanoparticles comprise surface areas of at least 10 m²/gram, more preferably at least 20 m²/gram, and even more preferably at least 25 m²/gram. In some embodiments the inorganic nanoparticles comprise porous or nonporous features.

In some embodiments the inorganic nanoparticles comprise a sol. Preferred sols contain from 15 wt % to 50 wt % of colloidal particles dispersed in a fluid medium. In some embodiments the inorganic nanoparticles comprise a sol in fluid media including water, aqueous alcohol solutions, lower aliphatic alcohols, ethylene glycol, N,N-dimethyl acetamide, formamide, or combinations thereof. In some embodiments the inorganic nanoparticles comprise a sol in water medium and optionally one or more alcohols.

In some embodiments, non-aqueous silica sols (also called silica organosols) may also be used and are silica sol dispersions wherein the liquid phase is an organic solvent, or an aqueous organic solvent. Useful silica sols include those where the liquid phase is compatible with the emulsion and is typically aqueous or an aqueous organic solvent. Silica particles may be spherical, generally spherical, or acicular. The term "acicular" refers to the general needle-like, elongated shape of the particles and may include other sting-like, rod-like, chain-like shapes, as well as filamentary shapes. The acicular silica sol may also be prepared as described in U.S. Patent No. 5,597,512 or U.S. Patent No. 5,221,497, for example, the disclosure of which are incorporated herein by reference thereto to the extent that they do not contradict the instant specification.

Useful acicular silica particles may be obtained as an aqueous suspension under the trade name SNOWTEX-UP by Nissan Chemical Industries (Tokyo, Japan). The mixture consists of 20-21 % (w/w) of acicular silica, less than 0.35% (w/w) of Na₂O, and water. The particles are about 9 to 15 nanometers in diameter and have lengths of 40 to 300 nanometers. The suspension has a viscosity of <100 mPas at 25°C, a pH of about 9 to 10.5, and a specific gravity of about 1.13 at 20°C. Other useful acicular silica particles may be obtained as an aqueous suspension under the trade name SNOWTEX-PS-S and SNOWTEX-PS-M by Nissan Chemical Industries, having a morphology of a string of pearls. The mixture consists of 20-21 % (w/w) of silica, less than 0.2% (w/w) of Na₂O, and water. The SNOWTEX-PS-M particles are about 18 to 25 nanometers in diameter and have lengths of 80 to 150 nanometers. The particle size is 80 to 150 by dynamic light scattering methods. The suspension has a viscosity of <100 mPas at 25°C, a pH of about 9 to 10.5, and a specific gravity of about 1.13 at 20°C. The SNOWTEX-PS-S has a particle diameter of 10-15 nm and a length of 80-120 nm.

The first primer layer may also include suitable fillers, including non-functionalized silica particles such as fumed silica and the like.

The composition that forms the first primer layer may be applied to the pressure sensitive adhesive on a release liner as, for example, as a mixture comprising a heat sealable polymer. The composition that forms the first primer layer may be applied to the carrier as, for example, as a solution or suspension in aqueous solvent. The composition that forms the first primer layer may be applied to the carrier by any suitable method, including spraying, coating, brushing, immersion, and the like. After application, the composition that forms the first primer layer may be heated to first evaporate any solvent and then promote thermal local intermixing and accelerate any crosslinking reaction between the pressure sensitive adhesive and the inorganic nanoparticles. In some embodiments, the first primer layer described above with reference to FIG. 1 may be laminated to a foam layer using heat and pressure.

In some embodiments, the first primer layer composition may be applied to the first pressure sensitive adhesive coated on a release liner and stored for long periods before application to foam layers, rather than requiring prompt lamination of the first primer layer to the foam layer. This characteristic allows greater flexibility in manufacture. Furthermore, in some embodiments of the present disclosure, the pressure sensitive adhesive layer having the first primer layer thereon, as well as a release liner roll may be stored for a long period and still be reliably laminated to a foam layer with heat and pressure.

The first primer layer may have a thickness of at least 1 micrometer, in some embodiments at least 3 micrometers, and in some embodiments at least 5 micrometers. In some embodiments first primer layers may have a thickness of less than 8 micrometers, in some less than 12 micrometers, in some less than 25 micrometers and in some less than 50 micrometers.

The second primer layer may be the same or different than the first primer layer. The second primer layer may be formed from the same or different components than the first primer layer; the second primer layer may be formed from same or different amounts of one or more components than the first primer layer; the second primer layer may have different characteristics, e.g., thicknesses, methods of making, etc. than the first primer layer; or any combinations thereof.

In some embodiments one or both surfaces of the foam layer may be in contact with optional skin layer(s) which provide greater planar stiffness relative to that of an unskinned foam layer. In some embodiments the foam layer may have a skin layer on one surface or both surfaces, that has a lower (or in some cases, essentially no) void volume relative to the average void volume of the interior or bulk of the foam layer. In some embodiments, one or both skin layers may comprise a polymer composition providing an elastically extensible skin layer. In various embodiments, the foam layer with any optional skin layers comprises flexible materials selected to provide a layer that may be wrapped around a 100 centimeter diameter cylinder without layer creasing or buckling when each face is in-turn orientated to the surface of the cylinder. In some embodiments, a less extensible, greater stiffness elastic skin layer may be provided on one foam layer surface, with an optional lower stiffness extensible skin layer on the opposite foam layer surface, where layer compositions are selected to provide an entire foam layer that may be wrapped around a 10 centimeter diameter cylinder without causing creasing or buckling when the non-extensible skin layer face is orientated away from the surface of the cylinder.

In some embodiments the optional skin layer may comprise an olefinic polymer including ethylene vinyl acetate, low and medium density polyethylene, linear low-density polyethylene and the like. Such articles and assemblies can have skin layer(s) having a thickness of at least 1 µm, 5 µm, or 10 µm; of less than 50 µm, 125 µm, or 250 µm; or combinations thereof.

A composition for forming the first primer layer can be formed using known methods. In some embodiments, methods for forming the first primer layer can include the steps of: a) mixing a functional silane and a waterborne silica sol, b) reacting the silane with the sol surface to create surface modified silica sol and c) mixing the surface modified silica sol with a waterborne polymeric dispersion of thermoplastic polymer.

Methods of making constructions such as disclosed articles herein that include a pressure sensitive adhesive layer bound to a foam layer can comprise steps of: a) providing a PSA layer coated on an release liner; b) coating the PSA layer with a primer layer coating mixture comprising a waterborne polymeric dispersion of thermoplastic polymer and surface modified silica sol; c) crosslinking the primer layer coating mixture to the PSA layer; d) laminating the primer layer to a foam layer at an elevated temperature to securely bond the primer layer to the foam and e) optionally crosslinking the primer layer with the foam layer. In some embodiments, steps a)-e) are carried out in the order a), b), c), d), e).

Some assemblies disclosed herein can include flexographic printing plates. Useful flexographic printing plates may be of any suitable material. In some embodiments, flexographic printing plates comprise polymeric materials, which in some embodiments are one or more polyesters.

Some assemblies disclosed herein can include flexographic printing press plate cylinders, which are also referred to herein as plate cylinders. Useful plate cylinders may be of any suitable material. In some embodiments, plate cylinders comprise polymeric materials, which in some embodiments are one or more polyurethanes. In some embodiments, plate cylinders comprise metal materials, which in some embodiments are steel.

### EXAMPLES

These examples are merely for illustrative purposes and are not meant to be overly limiting on the scope of the appended claims. Notwithstanding that the numerical ranges and parameters setting forth the broad scope of the present disclosure are approximations, the numerical values set forth in the specific examples are reported as precisely as possible. Any numerical value, however, inherently contains certain errors necessarily resulting from the standard deviation found in their respective testing measurements. At the very least, each numerical parameter should at least be construed in light of the number of reported significant digits and by applying ordinary rounding.

Unless otherwise noted, all chemicals used in the examples can be obtained from the noted suppliers.

### Materials

| **Material** | **Description** |
|---|---|
| Silica Sol | An aqueous dispersion of fumed silica, a milky-white liquid with a pH value of about 9.3, a density at 20° C of 1.29 grams per cubic centimeter, a nominal SiO₂ content of 40%, nominal particle size of 20 nm, nominal surface area of 150 sq m/gram, available under the trade designation NALCO 2327, from Nalco Water, an Ecolab Company, Napierville, IL. |
| Silane 1 | gamma-aminopropyltrimethoxysilane, neat, Silquest A-1 110 available from Momentive Performance Materials, Albany, NY. |
| Silane 2 | gamma-glycidoxypropyltrimethoxysilane, neat, Silquest A-187 available from Momentive Performance Materials, Albany, NY. |
| Thermoplastic Polymer Dispersion | An ethylene/vinyl acetate copolymer (EVA) with resin and wax additives dispersed in water having a nominal solids concentration of 30 weight%, and a pH of 10, available under the trade designation ADCOTE 37P295BW from Dow Chemical Company, Midland, MI. |
| IOA | Isooctyl acrylate, a colorless liquid containing 75-125 ppm monomethyl ether hydroquinone as inhibitor, >90 weight%, available from Sigma-Aldrich Co., LLC, St. Louis, MO. |
| AA | Acrylic acid, a colorless liquid, unsaturated carboxylic acid, available from Sigma-Aldrich Co., LLC. |
| Photoinitaitor | 2,2-Dimethoxy-2-phenylacetophenone, a photoinitiator having a melting point between 64° C and 67° C and a molecular weight of 256.3 grams per mole, available under the trade designation OMNIRAD BDK from IGM Resins USA Incorporated, Charlotte, NC. |
| IOTG | Isooctylthioglycolate, available from Sigma-Aldrich Co., LLC. |
| HDDA | Hexanediol diacrylate, available from Sigma-Aldrich Co., LLC. |
| Silica | Aerosil R-972 hydrophobic fumed silica, with a BET surface area of 110 square m/g and 16 nm primary particle size, available from Evonik Industries, Hanau-Wolfgang, Germany |
| Triazine | 2,4-bis(trichloromethyl)-6-(3,4 dimethoxyphenyl)-s-triazine, made by the co-trimerization of an arylnitrile with trichloroacetonitrile in the presence of HCl gas and a Lewis acid such as AlCl₃, AlBr₃, etc., as described in Bulletin of the Chemical Society Japan, Volume 42, page 2924 (1969). |
| Release Liner | A polyester film having a differential silicone release coating on each side and embossed on one side as described in Example 1 of EP1800865 A1. |
| EVA Foam | A closed cell, chemically crosslinked ethylene/vinyl acetate copolymer (EVA) foam having a nominal density of 0.192 grams/cubic centimeter and a thickness of approximately 432 micrometers. |
| Supplemental Primed Adhesive Transfer Tape | A removable acrylate adhesive transfer tape with a PSA layer thickness of approximately 51 micrometers on Release Liner with the exposed adhesive surface coated with Thermoplastic Polymer Dispersion at dried coverage of 8.2 grams/square meter. |

### Test Method

### Rub Resistance Test

Rub resistance was tested per ASTM D7835/D7835M - 13: "Standard Test Method for Determining the Solvent Resistance of an Organic Coating using a Mechanical Rubbing Machine" with the following modifications. The mechanical finger cylindrical diameter was 0.625 inch exerting a load of 30 +/-7 grams with a stroke length of two inches (5.1 centimeters), was covered with four layers of dry cheese cloth.

The test specimens were prepared as follows. Samples of double sided pressure sensitive adhesive tape constructions, measuring 1 inch wide by 5 inches long (2.54 centimeters by 12.7 centimeters) were adhered to a stainless steel plate measuring 2 inches wide by 6 inches long (5.1 centimeters by 15.2 centimeters), by removing the release liner from the supplementary adhesive face, and adhering the specimen to the panel, and then removing the primary release liner. A solvent combination of 80:20 (vol:vol) ethanol : ethyl acetate was then dripped onto the exposed adhesive surface in such a manner as to completely cover the adhesive surface area to be tested.

The adhesive surface with solvent thereon was then covered with a microscope slide to prevent solvent evaporation. After one minute, the slide was removed, and the adhesive surface was blotted dry using a tissue to remove any remaining free solvent. The test specimen panel was then held fast to the rubbing machine platform and immediately evaluated for its rub resistance using 15rub cycles of the mechanical finger. One cycle consisted of one complete forward and backward motion over the exposed solvent soaked adhesive surface at a rate of 15 cycles per minute.

During the mechanical rubbing process the specimen surface was monitored to observe and record the stroke cycle number during which adhesive first began to form abraded nibs. After 15 rub cycles the test was stopped and the probe and adhesive surface inspected for free adhesive nibs. Free nibs are those that could easily be moved along the adhesive surface with finger contact or that were detected on the cheese cloth covered probe after careful inspection produced a failing rub resistance test result. In comparison, a test resulting in no nibs or nibs that remained well attached to the adhesive surface with none detected on the cheese cloth covered probe produced a passing rub resistance result.

### Preparation of Primer Solution

Primer solution was prepared by diluting Thermoplastic Polymer Dispersion with deionized water per the amounts shown in Table 1 and mixing in a glass four-ounce jar. The resulting primer had a Brookfield viscosity of 83 centipoise and solids content of 30.2% by weight.

**Table 1: Primer Solution 1**

| Example | Thermoplastic Polymer Dispersion (grams*) | Deionized Water (grams) | Silica Sol (grams*) |
|---|---|---|---|
| Primer | 30.8 | 30.9 | 13.2 |

| | | | |
|---|---|---|---|
| *Weight of material as listed in the Materials chart above, i.e., at the stated dilution or solids content. | | | |

### Preparation of Pressure Sensitive Adhesive Transfer Tape (A)

### Example 1A

An adhesive precursor syrup was prepared by mixing 90 parts by weight (pbw) IOA, 10 pbw AA, 33.0 ×10⁻⁶ pbw IOTG and 0.04 pbw Photoinitiator and partially polymerizing it under a nitrogen atmosphere by exposure to an ultraviolet radiation source having a spectral output from 300-400 nanometers with a maximum at 351 nanometers to provide a syrup having a viscosity of about 3 Pa*s (3000 centipoise) and a monomer conversion of about 8%. A 100 gram portion of the syrup was weighed into a 8 oz jar and additional amounts of 0.12 gram of Triazine, 0.375 gram of HDDA, and 0.12 gram of Photoinitiator were added to the syrup followed by 2.67 grams additional weight of silica were in turn weighed then mixed into the syrup with a spatula. The jar was then capped and rolled continuously overnight to uniformly disperse the silica and other ingredients in the syrup.

Approximately 96 hours (4 days) prior to coating, 0.6 grams Silane 2 was mixed into the syrup. This adhesive syrup was then knife coated onto the embossed side of a release liner and exposed to ultraviolet radiation by means of a series of lamps having a spectral output from 300-400 nanometers with at maximum at 351 nanometers in a nitrogen-rich atmosphere for a time of 105 seconds to provide a total dose of 510 milliJoules/square centimeter as measured using a calibrated NIST radiometer. An adhesive transfer tape having pressure sensitive adhesive (PSA) layer, approximately 0.002 inches (51 micrometers) thick, on the embossed surface of the release liner was thereby obtained. The adhesive transfer tape was stored at ambient conditions prior to use.

### Example 2A

Example 2A was prepared using the same materials and procedures of Example 1A except that the added amount of Silane 2 was 0.1 grams.

### Comparative Example 1A

The procedure and recipe of Example 1A was used to prepare and coat an adhesive syrup to form an adhesive transfer tape except that the Silane 2 ingredient addition was omitted.

### Comparative Example 2A

The procedure and recipe of Example 1A was used to prepare and coat an adhesive syrup to form an adhesive transfer tape except that the Silane 2 ingredient addition was replaced with Silane 1. Within 2-3 minutes of Silane 1 addition, the adhesive syrup rapidly became viscous, then gelled and unsuitable for coating.

### Preparation of Primed Pressure Sensitive Adhesive Transfer Tape (B)

### Example 1B, Example 2B and Comparative Example 1B

A wet layer of primer solution was applied to adhesive transfer tape Example 1A, Example 2A and Comparative Example 1A using a #18 wire round Mayer rod. The primer coating was dried and cured in a forced air convection oven for 120 seconds at 49°C resulting in a dried prime layer coverage of 8.5 g/m².

### Preparation of Adhesive Bonded Foam Laminates (C)

### Examples 1C. Example 2C and Comparative Examples 1C

The Example 1B, Example 2B and Comparative Example 1B primed adhesive transfer tapes were laminated to a foam layer, by passing both through a heated rolling nip so that the interface between the foam and primer were bonded by maintaining a temperature between 126°C and 131°C for greater than two 2 seconds through a heated rolling nip. Using the same heated nip process, a supplemental primed adhesive transfer tape was bonded to the opposite foam face. The supplemental primed adhesive transfer tape thereby provided a means for bonding the adhesive bonded foam laminates to the stainless steel panel in order to complete Rub Resistance tests on each example. A minimum of 5 days after the preparation of the Primed Pressure Sensitive Adhesive Transfer Tape (B) examples and comparative examples, solvent resistance testing was evaluated for each. The number of cycles at which the first deformation of the adhesive surface was visually observed was recorded for Example 1C, Example 2C, and Comparative Example 1C, as exceeding 15 cycles, exceeding 15 cycles, and during 1 cycle to first nib creation, respectively. After 15 rub cycles the test was stopped and the probe and adhesive surface inspected for free adhesive nibs. For Example 1C and Example 2C the adhesive surface was undisturbed with no nibs observed (passing result), while for Comparative Example 1C numerous loose nibs were formed in the entire region contacted by the reciprocating finger (failing result).

### Prophetic Example 3A, Example 3B and Example 3C

A glycidoxy surface modified silica nanoparticle filler in dry powder form may first be prepared according to US6899948 B2 Filler C except that the A-174 silane could be replaced with a like amount of Silane 2. Next, Example 3A, Example 3B and Example 3C can be prepared using the same materials and procedures of Example 1A, Example 1B and Example 1C above except that the added Silica and Silane 2 could be replaced with 2.67 grams glycidoxy surface modified silica nanoparticle filler in dry powder form and the procedure could be completed so that the filler addition occurs at least 4 days prior to coating.

A minimum of 5 days after the preparation of a Primed Pressure Sensitive Adhesive Transfer Tape 3B (according to the same procedure of Example 2B) solvent resistance testing could be evaluated. The number of cycles at which the first deformation of the adhesive surface is visually observed and found to be greater than 12 cycles could be reported. After 15 rub cycles the test is stopped and the adhesive surface inspected and found to be somewhat disturbed with some displaced adhesive but having no loose or free nibs on the adhesive surface or attached to the cheesecloth covered finger (which would indicate a passing result), or otherwise.

## Claims

1. An article comprising:
a foam layer, having a first surface and a second opposing surface;
a first primer layer, the first primer layer comprising thermoplastic polymeric binder; and
a first pressure sensitive adhesive layer, having a first surface and a second opposing surface, the first pressure sensitive adhesive layer comprising a poly(meth)acrylate polymer and an epoxy functional nanoparticle,
wherein the first primer layer is positioned between the first surface of the foam layer and the second surface of the first pressure sensitive adhesive layer.

2. The article according to claim 1, wherein the first primer layer further comprises silica.

3. An article according to claim 1 or 2, further comprising a second primer layer and a second pressure sensitive adhesive layer, wherein the second primer layer is positioned between the second surface of the foam layer and the second pressure sensitive pressure adhesive layer.

4. An article according to any one of claims 1 to 3, further comprising a first release liner positioned on the first surface of the first pressure sensitive adhesive layer.

5. An article according to claim 3 or 4, further comprising a second release liner positioned on the second surface of the second pressure sensitive adhesive layer.

6. An article according to any one of claims 1 to 5, further comprising a first skin layer positioned between the first surface of the foam layer and the first primer layer.

7. An article according to any one of claims 3 to 6, further comprising a second skin layer positioned between the second surface of the foam layer and the second primer layer.

8. An assembly comprising:
a flexographic printing plate; and
a mounting tape comprising:
a foam layer, having a first surface and a second opposing surface;
the first primer layer comprising thermoplastic polymeric binder;
a first pressure sensitive adhesive layer, having a first surface and a second opposing surface, the first pressure sensitive adhesive layer comprising a poly(meth)acrylate polymer and an epoxy functional nanoparticle, wherein the first primer layer is positioned between the first surface of the foam layer and the second surface of the first pressure sensitive adhesive layer, and wherein the first surface of the first pressure sensitive adhesive layer is attached to the flexographic printing plate.

9. An assembly according to claim 8, wherein the mounting tape further comprises a second primer layer and a second pressure sensitive adhesive layer having a first surface and a second opposing surface, wherein the second primer layer is positioned between the second surface of the foam layer and the first surface of the second pressure sensitive pressure adhesive layer.

10. An assembly according to claim 9, further comprising a plate cylinder, wherein the plate cylinder is attached to the mounting tape via the second surface of the second pressure sensitive adhesive layer.

11. An article or assembly according to any one of claims 1 to 10, wherein the poly(meth)acrylate polymer is tackified.

12. An article or assembly according to any one of claims 1 to 11, wherein the poly(meth)acrylate polymer comprises units derived from a polar monomer in an amount of 0.1 weight percent to 15 weight percent of the total weight of the polyacrylate polymer.

13. An article or assembly according to claim 12, wherein the polar monomer is selected from the group consisting of acrylic acid, itaconic acid, N,N dimethylacrylamide, N-vinyl-2-pyrrolidone, N-vinyl caprolactam, acrylonitrile, tetra-hydrofurfuryl acrylate, glycidyl acrylate, 2-phenoxyethylacrylate, benzylacrylate, and combinations thereof.

14. An article or assembly according to any one of claims 1 to 13, wherein the epoxy functional nanoparticle comprises silica having a mean primary particle size of at least 5 nm, of less than 200 nm, or any combination thereof, as measured according to the description.

15. An article or assembly according to any one of claims 1 to 14, wherein the epoxy functional nanoparticle comprises fumed silica.

## Patentansprüche

1. Ein Gegenstand, umfassend:
eine Schaumschicht, die eine erste Oberfläche und eine zweite gegenüberliegende Oberfläche aufweist;
eine erste Primerschicht, die erste Primerschicht umfassend ein thermoplastisches Polymerbindemittel; und
eine erste druckempfindliche Kleberschicht, die eine erste Oberfläche und eine zweite gegenüberliegende Oberfläche aufweist, die erste druckempfindliche Kleberschicht umfassend ein Poly(meth)acrylatpolymer und ein epoxyfunktionelles Nanoteilchen,
wobei die erste Primerschicht zwischen der ersten Oberfläche der Schaumschicht und der zweiten Oberfläche der ersten druckempfindlichen Kleberschicht positioniert ist.

2. Der Gegenstand nach Anspruch 1, wobei die erste Primerschicht ferner Siliciumdioxid umfasst.

3. Ein Gegenstand nach Anspruch 1 oder 2, ferner umfassend eine zweite Primerschicht und eine zweite druckempfindliche Kleberschicht, wobei die zweite Primerschicht zwischen der zweiten Oberfläche der Schaumschicht und der zweiten druckempfindlichen Kleberschicht positioniert ist.

4. Ein Gegenstand nach einem der Ansprüche 1 bis 3, ferner umfassend eine erste Abziehfolie, die auf der ersten Oberfläche der ersten druckempfindlichen Kleberschicht positioniert ist.

5. Ein Gegenstand nach Anspruch 3 oder 4, ferner umfassend eine zweite Abziehfolie, die auf der zweiten Oberfläche der zweiten druckempfindlichen Kleberschicht positioniert ist.

6. Ein Gegenstand nach einem der Ansprüche 1 bis 5, ferner umfassend eine erste Hautschicht, die zwischen der ersten Oberfläche der Schaumschicht und der ersten Primerschicht positioniert ist.

7. Ein Gegenstand nach einem der Ansprüche 3 bis 6, ferner umfassend eine zweite Hautschicht, die zwischen der zweiten Oberfläche der Schaumschicht und der zweiten Primerschicht positioniert ist.

8. Eine Anordnung, umfassend:
eine Flexodruckplatte; und
Ein Montageband, umfassend:
eine Schaumschicht, die eine erste Oberfläche und eine zweite gegenüberliegende Oberfläche aufweist;
die erste Primerschicht umfassend ein thermoplastisches Polymerbindemittel;
eine erste druckempfindliche Kleberschicht, die eine erste Oberfläche und eine zweite gegenüberliegenden Oberfläche aufweist, die erste druckempfindliche Kleberschicht umfassend ein Poly(meth)acrylatpolymer und ein epoxyfunktionelles Nanoteilchen, wobei die erste Primerschicht zwischen der ersten Oberfläche der Schaumschicht und der zweiten Oberfläche der ersten druckempfindlichen Kleberschicht positioniert ist, und wobei die erste Oberfläche der ersten druckempfindlichen Kleberschicht an der Flexodruckplatte angebracht ist.

9. Eine Anordnung nach Anspruch 8, wobei das Montageband ferner eine zweite Primerschicht und eine zweite druckempfindliche Kleberschicht umfasst, die eine erste Oberfläche und eine zweite gegenüberliegende Oberfläche aufweist, wobei die zweite Primerschicht zwischen der zweiten Oberfläche der Schaumschicht und der ersten Oberfläche der zweiten druckempfindlichen Kleberschicht positioniert ist.

10. Eine Anordnung nach Anspruch 9, ferner umfassend einen Plattenzylinder, wobei der Plattenzylinder über die zweite Oberfläche der zweiten druckempfindlichen Kleberschicht an dem Montageband angebracht ist.

11. Ein Gegenstand oder eine Anordnung nach einem der Ansprüche 1 bis 10, wobei das Poly(meth)acrylatpolymer klebrig gemacht ist.

12. Ein Gegenstand oder eine Anordnung nach einem der Ansprüche 1 bis 11, wobei das Poly(meth)acrylatpolymer Einheiten umfasst, die von einem polaren Monomer in einer Menge von 0,1 Gewichtsprozent bis 15 Gewichtsprozent des Gesamtgewichts des Polyacrylatpolymers abgeleitet sind.

13. Ein Gegenstand oder eine Anordnung nach Anspruch 12, wobei das polare Monomer aus der Gruppe ausgewählt ist, bestehend aus Acrylsäure, Itaconsäure, N,N-Dimethylacrylamid, N-Vinyl-2-pyrrolidon, N-Vinylcaprolactam, Acrylnitril, Tetrahydrofurfurylacrylat, Glycidylacrylat, 2-Phenoxyethylacrylat, Benzylacrylat und Kombinationen davon.

14. Ein Gegenstand oder eine Anordnung nach einem der Ansprüche 1 bis 13, wobei das epoxyfunktionelle Nanoteilchen Siliciumdioxid umfasst, das eine mittlere Teilchengröße von mindestens 5 nm, von weniger als 200 nm oder einer beliebigen Kombination davon aufweist, wie gemäß der Beschreibung gemessen.

15. Ein Gegenstand oder eine Anordnung nach einem der Ansprüche 1 bis 14, wobei das epoxyfunktionelle Nanoteilchen pyrogene Kieselsäure umfasst.

## Revendications

1. Article comprenant :
une couche de mousse ayant une première surface et une seconde surface opposée ;
une première couche d'accroche, la première couche d'accroche comprenant un liant polymère thermoplastique ; et
une première couche d'adhésif sensible à la pression, ayant une première surface et une seconde surface opposée, la première couche d'adhésif sensible à la pression comprenant un polymère de poly(méth)acrylate et une nanoparticule fonctionnelle époxy,
la première couche d'accroche étant placée entre la première surface de la couche de mousse et la seconde surface de la première couche d'adhésif sensible à la pression.

2. Article selon la revendication 1, dans lequel la première couche d'accroche comprend en outre de la silice.

3. Article selon la revendication 1 ou 2, comprenant en outre une deuxième couche d'accroche et une deuxième couche d'adhésif sensible à la pression, la deuxième couche d'accroche étant placée entre la seconde surface de la couche de mousse et la deuxième couche d'adhésif sensible à la pression.

4. Article selon l'une quelconque des revendications 1 à 3, comprenant en outre une première feuille anti-adhésive placée sur la première surface de la première couche d'adhésif sensible à la pression.

5. Article selon la revendication 3 ou 4, comprenant en outre une deuxième feuille anti-adhésive placée sur la seconde surface de la seconde couche d'adhésif sensible à la pression.

6. Article selon l'une quelconque des revendications 1 à 5, comprenant en outre une première couche de peau placée entre la première surface de la couche de mousse et la première couche d'accroche.

7. Article selon l'une quelconque des revendications 3 à 6, comprenant en outre une seconde couche de peau placée entre la seconde surface de la couche de mousse et la deuxième couche d'accroche.

8. Ensemble comprenant :
une plaque d'impression flexographique ; et
un ruban de montage comprenant :
une couche de mousse ayant une première surface et une seconde surface opposée ;
la première couche d'accroche comprenant un liant polymère thermoplastique ;
une première couche d'adhésif sensible à la pression, ayant une première surface et une seconde surface opposée, la première couche d'adhésif sensible à la pression comprenant un polymère de poly(méth)acrylate et une nanoparticule fonctionnelle époxy, la première couche d'accroche étant placée entre la première surface de la couche de mousse et la seconde surface de la première couche d'adhésif sensible à la pression, la première surface de la première couche d'adhésif sensible à la pression étant liée à la plaque d'impression flexographique.

9. Ensemble selon la revendication 8, dans lequel le ruban de montage comprend en outre une seconde couche d'accroche et une seconde couche d'adhésif sensible à la pression ayant une première surface et une seconde surface opposée, la seconde couche d'accroche étant placée entre la seconde surface de la couche de mousse et la première surface de la seconde couche d'adhésif sensible à la pression.

10. Ensemble selon la revendication 9, comprenant en outre un cylindre de plaque, le cylindre de plaque étant fixé à la bande de montage par la seconde surface de la seconde couche d'adhésive sensible à la pression.

11. Article ou ensemble selon l'une quelconque des revendications 1 à 10, dans lequel le polymère de poly(méth)acrylate est rendu poisseux.

12. Article ou ensemble selon l'une quelconque des revendications 1 à 11, dans lequel le polymère poly(méth)acrylate comprend des unités dérivées d'un monomère polaire dans une proportion de 0,1 % en poids à 15 % en poids du poids total du polymère polyacrylate.

13. Article ou ensemble selon la revendication 12, dans lequel le monomère polaire est choisi dans le groupe constitué par l'acide acrylique, l'acide itaconique, le N,N-diméthylacrylamide, la N-vinyl-2-pyrrolidone, le N-vinyl caprolactame, l'acrylonitrile, l'acrylate de tétra-hydrofurfuryle, l'acrylate de glycidyle, l'acrylate de 2-phénoxyéthyle, l'acrylate de benzyle, et des combinaisons de ceux-ci.

14. Article ou ensemble selon l'une quelconque des revendications 1 à 13, dans lequel la nanoparticule fonctionnelle époxy comprend de la silice ayant une taille moyenne de particule primaire d'au moins 5 nm, de moins de 200 nm ou toute combinaison de celles-ci, telle que mesurée selon la description.

15. Article ou ensemble selon l'une quelconque des revendications 1 à 14, dans lequel la nanoparticule fonctionnelle époxy comprend de la silice pyrogénée.
